Europäisches Patentamt

European Patent Office

Office européen des brevets

(19)

(11) Veröffentlichungsnummer: **0 099 446**
A1

# (12) EUROPÄISCHE PATENTANMELDUNG

(21) Anmeldenummer: **83103586.0**

(22) Anmeldetag: **14.04.83**

(51) Int. Cl.³: **C 25 C 7/00**
**F 16 L 58/10**

(30) Priorität: **22.07.82 DE 3227418**

(43) Veröffentlichungstag der Anmeldung:
**01.02.84 Patentblatt 84/5**

(84) Benannte Vertragsstaaten:
**BE DE FR GB IT LU NL SE**

(71) Anmelder: **Clouth Gummiwerke AG**
**Niehler Strasse 92 - 116**
**D-5000 Köln 60(DE)**

(72) Erfinder: **Brand, Dieter**
**Zedernweg 14**
**D-5000 Köln 71(DE)**

(74) Vertreter: **Happe, Otto**
**Isselburger Strasse 12**
**D-5000 Köln 60(DE)**

(54) **Säureverteiler-System für eine Metallelektrolyseanlage.**

(57) Bei einem Säureverteiler-System für eine Metallelektrolyseanlage, bestehend aus Rohren, Rohranschlüssen, T-Stücken u. dgl. bestehen die Rohre (1), Rohranschlüsse (2, 3, 4), T-Stücke u. dgl. aus mit einer Gewebearmierung (5) versehenen Gummiteilen, wobei die Innenflächen (6) der Rohre (1), Rohranschlüsse (2, 3, 4), T-Stücke u. dgl. durch eine Gummischicht gebildet sind.

EP 0 099 446 A1

Säureverteiler-System für eine Metallelektrolyseanlage

Die Erfindung betrifft ein Säureverteiler-System für eine Metallelektrolyseanlage, bestehend aus Rohren, Rohranschlüssen, T-Stücken u. dgl..

Durch das Säureverteiler-System der vorgenannten Art wird Metallelektrolyt geleitet, bei einer Zinkelektrolyseanlage beispielsweise Zinkelektrolyt. Derartige Metallelektrolyte neigen dazu, an den Innenflächen der Rohre, Rohranschlüsse, T-Stücke u. dgl. Inkrustationen zu bilden. Bei den bekannten Säureverteiler-Systemen, die aus starren, aus Metall oder Kunststoff gebildeten Rohren, Rohranschlüssen, T-Stücken u. dgl. bestehen, führen die Inkrustationen in verhältnismäßig kurzer Zeit zu einer wesentlichen Beeinträchtigung des Produktionsablaufs. Die bekannten Säureverteiler-Systeme müssen daher in verhältnismäßig kurzen Zeitabständen aufwendigen Reinigungsprozessen unterzogen werden.

Der Erfindung liegt die Aufgabe zugrunde, die vorgenannten Schwierigkeiten zu vermieden und das Säureverteiler-System so auszubilden, daß einerseits die Bildung von Inkrustationen verringert bzw. vermieden wird und andererseits die Beseitigung der noch möglichen Inkrustationen erleichtert wird.

Die Lösung der gestellten Aufgabe besteht darin, daß die Rohre, Rohranschlüsse, T-Stücke u. dgl. aus mit einer Gewebearmierung versehenen Gummiteilen bestehen, wobei die Innenflächen der Rohre, Rohranschlüsse, T-Stücke u. dgl. durch eine Gummischicht gebildet sind.

Durch die erfindungsgemäße Ausbildung des Säureverteiler-Systems wird die Bildung von Inkrustationen dadurch verringert, daß die Rohre, Rohranschlüsse, T-Stücke u. dgl. infolge ihrer Elastizität beim Durchfluß des Metallelektrolyts in leichte Schwingungen versetzt werden, wobei durch die Inkrustationen zumindest zum Teil selbsttätig abgelöst werden. Die Elastizität der Rohre, Rohranschlüsse, T-Stücke u. dgl. erleichtert ferner wesentlich deren Reinigung. Dadurch da die Innenfläche der Rohre, Rohranschlüsse, T-Stücke u. dgl. durch eine Gummischicht gebildet ist, wird vermieden, daß das Metallelektrolyt mit der Gewebearmierung in Berührung kommt.

In Ausgestaltung der Erfindung ist die Innenfläche der Rohre, Rohranschlüsse, T-Stücke u. dgl. glatt ausgebildet. Hierdurch wird die Bildung von Inkrustationen noch mehr erschwert bzw. weitgehend verhindert.

Die Bildung von Inkrustationen wird fast vollständig dadurch vermieden, daß die Innenflächen der Rohre, Rohranschlüsse, T-Stücke u. dgl. mit einer Auflage versehen sind, an der die Bestandteile des in dem Säureverteiler-System vorhandenen Metallelektrolyts nicht anhaften.

A 326

Damit die Verbindungsstellen zwischen einem Rohr und einem Rohranschluß den auftretenden Beanspruchungen gewachsen sind, ist in Weiterbildung der Erfindung die Gewebearmierung jedes Rohres durchgehend in alle Rohranschlüsse o. dgl. geführt.

Es hat sich als vorteilhaft erwiesen, das Säureverteiler-System so auszubilden, daß die Rohre aus Teilstücken von mindestens neun Meter Länge bestehen.

Damit das Säureverteiler-System auch nach langer Betriebszeit dicht bleibt, sind die an und zwischen den Rohren, Rohranschlüssen, T-Stücken u. dgl. vorhandenen Verbindungsstellen durch Vulkanisation hergestellt. Dies gilt sowohl für längsverlaufende als auch für rundumverlaufende Verbindungsstellen.

Eine andere vorteilhafte Art der Verbindung von zwei Rohren bzw. den Teilstücken der Rohre besteht darin, daß die Rohre bzw. die Teilstücke der Rohre an einem ihrer Enden mit einer muffenartigen Erweiterung versehen sind, während in das andere Ende ein Metallring eingearbeitet ist.

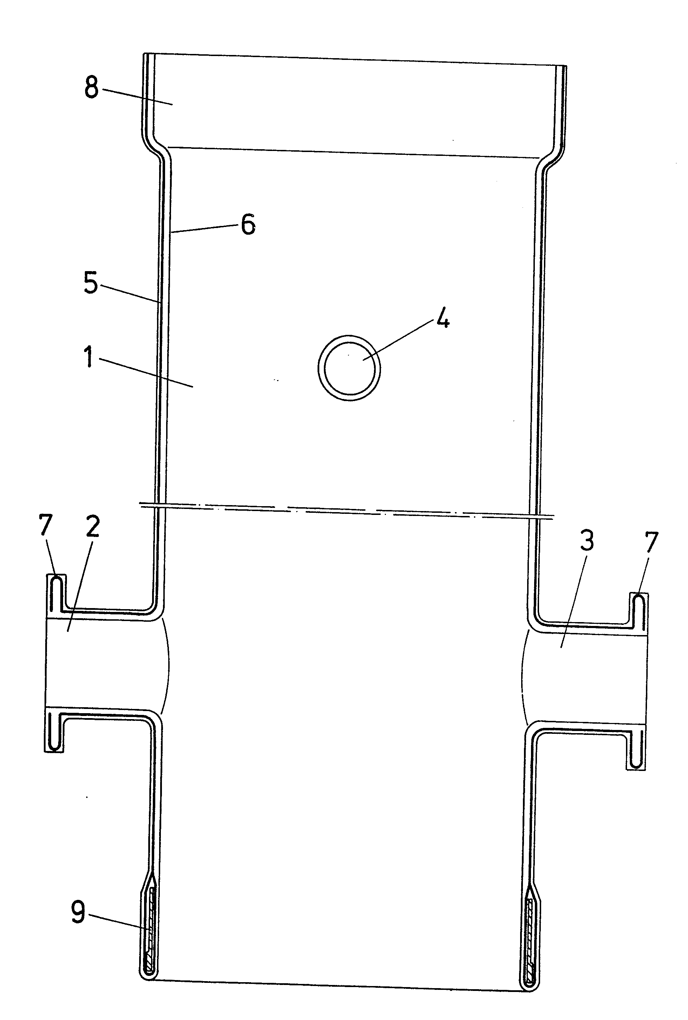

In der Zeichnung ist als Ausführungsbeispiel der Erfindung ein Rohrabschnitt mit mehreren Rohranschlüssen im Längsschnitt dargestellt, wobei wegen der besseren Übersichtlichkeit die Rohrwandungen nicht schraffiert und die Gewebearmierungen durch eine Volllinie angedeutet sind.

Der Rohrabschnitt 1 und die Rohranschlüsse 2, 3 und 4 sind mit einer durchgehenden Gewebearmierung 5 versehen. Die Innenfläche 6 des Rohrabschnitts 1 besteht aus

A 326

Gummi. Die Verbindungsstellen zwischen dem Rohrabschnitt 1 und den Rohranschlüssen 2, 3 und 4 sind durch Vulkanisation hergestellt. An die Rohranschlüsse 2 und 3 sind Flansche 7 anvulkanisiert; in den Flanschen 7 ist die Gewebearmierung 5 schleifenförmig geführt.

Der Rohrabschnitt 1 ist an einem seiner Enden mit einer Erweiterung 8 versehen; in das andere Ende ist ein Metallring 9 eingearbeitet.

A 326

0099446

- 1 -

Ansprüche:

1. Säureverteiler-System für eine Metallelektrolyseanlage, bestehend aus Rohren, Rohranschlüssen, T-Stücken u. dgl., d a d u r c h  g e k e n n - z e i c h n e t , daß die Rohre (1), Rohranschlüsse (2, 3, 4), T-Stücke u. dgl. aus mit einer Gewebearmierung (5) versehenen Gummiteilen bestehen, wobei die Innenflächen (6) der Rohre (1), Rohranschlüsse (2, 3, 4), T-Stücke u. dgl. durch eine Gummischicht gebildet sind.

2. Säureverteiler-System nach Anspruch 1, dadurch gekennzeichnet, daß die Innenflächen (6) der Rohre (1), Rohranschlüsse (2, 3, 4), T-Stücke u. dgl. glatt ausgebildet sind.

3. Säureverteiler-System nach Anspruch 1, dadurch gekennzeichnet, daß die Innenflächen (6) der Rohre (1), Rohranschlüsse (2, 3, 4), T-Stücke u. dgl. mit einer Auflage versehen sind, an der die Bestandteile des in dem Säureverteiler-System vorhandenen Metallelektrolyts nicht anhaften.

4. Säureverteiler-System nach Anspruch 1, 2 oder 3, dadurch gekennzeichnet, daß die Gewebearmierung (5) jedes Rohres (1) durchgehend in alle Rohranschlüsse (2, 3, 4) o. dgl. geführt ist.

A 326

- 2 -

0099446

- 2 -

5. Säureverteiler-System nach einem der Ansprüche
1 bis 4, dadurch gekennzeichnet, daß die Rohre (1)
aus Teilstücken von mindestens neun Meter Länge
· bestehen.

6. Säureverteiler-System nach einem der Ansprüche
1 bis 5, dadurch gekennzeichnet, daß die an und
zwischen den Rohren 1, Rohranschlüssen (2, 3, 4),
T-Stücken u. dgl. vorhandenen Verbindungsstellen
durch Vulkanisation hergestellt sind.

7. Säureverteiler-System nach einem der Ansprüche
1 bis 5, dadurch gekennzeichnet, daß die
Röhre (1) bzw. die Teilstücke der Rohre (1) an
einem ihrer Enden mit einer muffenartigen Erweiterung (8) versehen sind, während in das
andere Ende ein Metallring (9) eingearbeitet ist.

A 326

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-4 122 870  (HINES)<br>* Spalte 2, Zeile 58 - Spalte 4, Zeile 29; Figur 1 * | 1-7 | C 25 C   7/00<br>F 16 L   58/10 |
| X | R.M. BURNS et al.: "Protective coatings for metals", 3. Auflage, 1967, Seiten 630-633, Reinhold Publishing Corporation, New York, USA<br>* Seite 631, Zeile 4 - Seite 633, Zeile 23 * | 1-6 | |
| X | "HANDBUCH DER GALVANOTECHNIK", Band I, Teil 1, 1963, Seite 337, Carl Hanser Verlag, München, DE.<br>* Seite 337, Zeile 3 * | 1-6 | |
| A | DE-A-1 729 718  (VAL. MEHLER) | | RECHERCHIERTE SACHGEBIETE (Int. Cl. 3) |
| A | DE-B-1 021 663  (FRANZ CLOUTH RHEINISCHE GUMMIWARENFABRIK AG.) | | C 25 C<br>F 16 L<br>B 29 H |

Der vorliegende Recherchenbericht wurde für alle Patentansprüche erstellt.

| Recherchenort | Abschlußdatum der Recherche | Prüfer |
|---|---|---|
| DEN HAAG | 31-10-1983 | GRUNDKE H.H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1503. 03.82